# EUROPEAN PATENT APPLICATION

(11) **EP 4 369 577 A1**
(43) Date of publication of application: **15.05.2024**
(21) Application number: 22206648.2
(22) Date of filing: 10.11.2022
(51) Int. Cl.: H02M 1/00, H02M 3/335, H02M 7/5387

(54) **BI-DIRECTIONAL POWER CONVERTER**

(71) Applicant: Siemens Aktiengesellschaft, 80333 München (DE)
(72) Inventor: KADAM, Abhijit, 421503 Thane, Maharashtra (IN)
(74) Representative: Patentanwaltskanzlei WILHELM & BECK

(57) **Abstract**

A bi-directional power converter (102), a control unit (104), a charging device (200) and a method (600) for transferring power between an EV (106) and a power grid are provided. The bi-directional power converter (102) includes an isolated DC-DC converter (102C) having a first stage (201) converting a DC voltage (V1) into a high frequency AC voltage (V1ac), a second stage (202), having four power conversion switches (S5-S8) and capacitors (C1, C2), capable of converting a high frequency AC voltage (V2ac) having an amplitude V2 into the DC voltage (Vdc) having an amplitude of V2 or 2V2 in a power conversion mode, and converting the DC voltage (Vdc) into a multi-level high frequency AC voltage (V2ac) in a power inversion mode, and an intermediary stage (203) electrically coupled to the first and the second stages (201, 202), having a high frequency transformer of a turns ratio V1 :V2.

## Description

The present disclosure relates to a power converter. More particularly, the present disclosure relates to a bidirectional power converter employable in DC fast charging of Electric Vehicles (EVs).

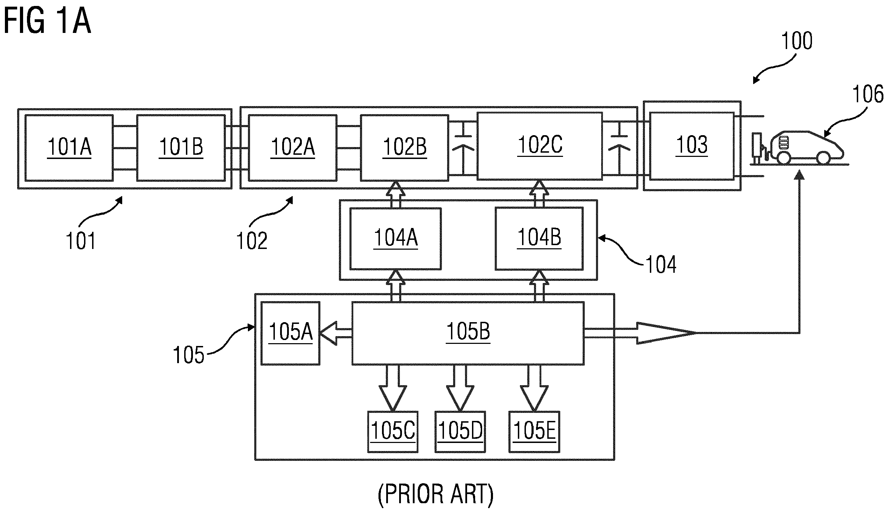

EVs are being adopted worldwide as an alternative to the traditional internal combustion-based vehicles. Therefore, there arises a growing demand for the development of charging infrastructure for fast charging of these EVs. One of the methods for fast charging is a DC fast charger. FIG 1A illustrates a block diagram of a DC charger 100 employed in charging of EVs 106, according to state of the art. The DC charger 100 includes a low voltage input module 101, a power electronic module 102 also referred to as a power converter 102, and an output module 103 electrically coupled to one another. The low voltage input module has a 3-phase AC voltage supply Vac coming from the three-phase power grid 101A and an input side protection unit 101B. The power converter 102 has an input filter 102A, a 3-phase AC to DC converter 102B such as a 3-phase pulse width modulation (PWM) converter and an isolated DC-DC converter 102C, electrically coupled with one another. The output module 103 is an output protection unit that provides DC voltage at its output which is used by an EV 106 for DC fast charging. The DC charger 100 also includes a controller module 104 having one or more controllers 104A, 104B. The controller module 104 is electrically coupled with the power converter 102 for controlling the 3-phase pulse width modulation (PWM) converter 102B and the isolated DC-DC converter 102C.

The DC charger 100 also includes a software module 105 having a user interface 105A such as a human machine interface (HMI) electrically coupled with a communication controller module 105B which in turn communicates with portable electronic devices 105C such as cell phones, a cloud communication network 105D and/or a power grid 105E such as a smart grid including distributed grids. The communication controller module 105B also communicates with the EV 106.

The DC output voltage being provided to the EV 106 should conform to the battery voltage rating of the EV 106 being charged. Usually, the battery capacity and voltage requirement of an EV 106 varies depending upon the EV range, that is, the distance which the EV 106 can cover in one full battery charge. For example, low range vehicles have a battery voltage of about 150V, whereas high range or heavy vehicles like E-trucks and E-Buses have a battery voltage of about 1000V to 1500V. Therefore, for charging various types of EVs 106, the DC output voltage of the DC charger 100 should have a wide range from about 150V to about 1500V while ensuring delivery of high power over the whole range.

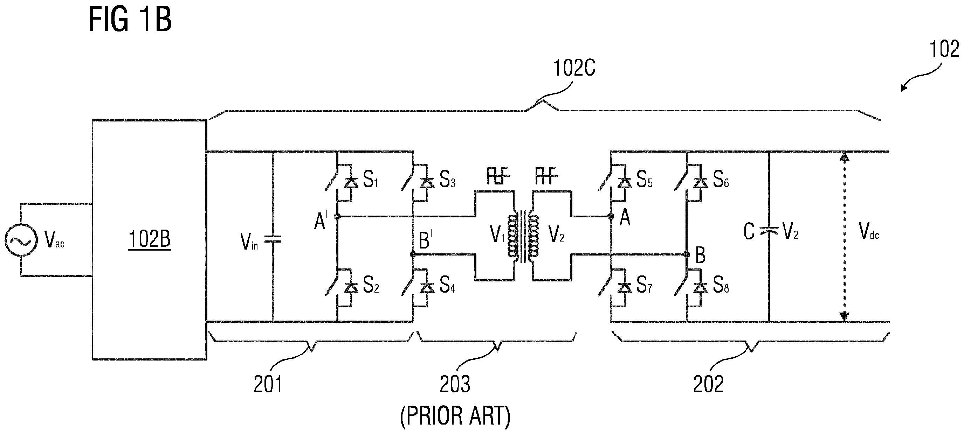

FIG 1B illustrates an electrical circuit diagram of the power converter 102 of the DC charger 100 shown in FIG 1A, according to state of the art. The power converter 102 receives a 3-phase AC input Vac from the input module 101 which is then provided to its 3-phase AC to DC conversion module 102B which provides a DC output voltage V1 which in turn is provided as an input to the DC-DC converter 102C. The DC-DC converter 102C typically comprises two power conversion stages namely a first stage 201 performing DC to high frequency AC conversion and a second stage 202 performing high frequency AC to DC conversion. At the first stage 201, the DC voltage V1 is converted to a high frequency AC voltage of amplitude V1. At the second stage 202, a high frequency AC voltage of amplitude V2 is converted to the output DC voltage of Vdc. These two stages 201 and 202 are coupled by an intermediary stage 203 providing high frequency isolation therebetween. The intermediary stage 203 includes a high frequency transformer connected between the first stage 201 and the second stage 202 having a turns ratio of V1 :V2.

As shown in FIG 1B, a generic dual active bridge converter having four switches S5, S6, S7 and S8 is employed at the second stage 202. A switching table for the second stage 202 is shown in Table 1 below where:
The values 1 and 0 symbolize switch turn on and switch turn off respectively;
VAB is the voltage between nodes A and B; and
Vdc is the DC voltage of the converter.

**Table 1**

| VAB | S5 | S6 | S7 | S8 | Vdc |
|---|---|---|---|---|---|
| +V2 | 1 | 0 | 0 | 1 | +V2 |
| -V2 | 0 | 1 | 1 | 0 | +V2 |
| 0 | 1 | 1 | 0 | 0 | +V2 |
| 0 | 0 | 0 | 1 | 1 | +V2 |

From table 1, it is clear that, the maximum output voltage Vdc offered by the conventional power converter 102 of the DC charger 100 shown in FIG 1A, is equal to the amplitude of high frequency voltage V2. Moreover, each of the switches S5, S6, S7 and S8 is rated for a voltage of V2. Hence, for a DC output voltage of 1000V, considering a 1.5 times margin, there would be a need of switch(es) that are rated for at least 1500V. The next highest voltage rating silicon carbide (SiC MOSFET) switch available is of 1200V and 1700V. However, current rating for a 1700V switch is not remarkably high. Therefore, two switches of 1200V are required to be connected in series to represent each of the switch S5, S6, S7 and S8. Thus, making a total requirement of 8 SiC MOSFETs. Moreover, for same power rating at low voltage output, that is, of about 300V, high current flows through the switches S5, S6, S7 and S8. Consequently, the current rating requirement of the switches also increases.

Accordingly, it is an object of the present disclosure to provide a bi-directional power converter that provides a wide range of DC voltages without compromising on delivery of power across the DC voltage range and optimizing requirement of a number of switches used therein.

Moreover, it is another object of the present disclosure to provide a charging device and method employing aforementioned bi-directional power converter for transferring power between an electric vehicle and a power grid.

Furthermore, it is another object of the present disclosure to provide a control unit controlling the bi-directional power converter for transferring power between an electric vehicle and a power grid.

The bi-directional power converter disclosed herein comprises an isolated DC-DC converter of the bi-directional power converter which includes a first stage, a second stage, and an intermediary stage.

The first stage is capable of converting a DC voltage (V1) into a high frequency AC voltage (V1ac) having an amplitude V1 and vice versa. The second stage is configured to operate in a power conversion mode of operation or a power inversion mode of operation.

In the power conversion mode of operation, the second stage selectively converts a high frequency AC voltage V2ac having an amplitude V2 into a DC voltage Vdc. The amplitude of the DC voltage Vdc in a low voltage mode of operation of the second stage is V2, that is, same as the high frequency AC voltage V2ac. The amplitude of the DC voltage Vdc in a high voltage mode of operation of the second stage is 2V2, that is, double the amplitude of the high frequency AC voltage V2ac. Advantageously, in this power conversion mode of operation, the bi-directional power converter may find applications in devices employed for a grid to vehicle G2V charging.

In the power inversion mode of operation, the second stage converts the DC voltage Vdc into a multi-level high frequency AC voltage V2ac. Advantageously, in this power inversion mode of operation, the bi-directional power converter may find applications in devices employed for a vehicle to grid V2G charging and/or energy storage which is a requirement posed under several standards pertaining to EV charging. The multi-level AC voltage V2ac comprises three levels namely +V2, 0, and -V2 corresponding to the DC voltage Vdc having an amplitude 2V2. Similarly, the multi-level AC voltage V2ac comprises three levels namely +0.5V2, 0, and -0.5V2 corresponding to the DC voltage Vdc having an amplitude V2.

The intermediary stage is electrically coupled to the first stage and the second stage and comprises a high frequency transformer. A turns ratio of the high frequency transformer equals a ratio of the high frequency AC voltage (V1ac) and the high frequency AC voltage (V2ac). Typically, V1 depends on the power grid supply voltage connection and V2 depends on a maximum voltage capacity of a vehicle battery. According to one embodiment, the high frequency transformer is a two-winding transformer. According to another embodiment, the high frequency transformer is a multi-winding transformer, for example having multiple windings at the primary side and multiple windings at the secondary side. According to this embodiment, the high frequency AC voltage V1ac is appears at one of the windings at the primary side and the high frequency AC voltage V2ac appears across a set of multiple windings on the secondary side. According to this embodiment, multiple second stages, that is, one per winding at the secondary side, are connected in parallel.

The bi-directional power converter disclosed herein achieves the aforementioned object in that the second stage comprises
four power conversion switches S5-S8 and two or more capacitors C1, C2. The capacitors C1, C2 have a common node C therebetween. Two of the power conversion switches S6, S8 are series connected between the common node C and one of the DC poles of the second stage and the two power conversion switches S6, S8 have a mid-point therebetween that is connected to one of the ends B of a secondary winding A-B of the high frequency transformer of the intermediary stage.

The first stage comprises four power conversion switches S1-S4 connected between a primary winding A'-B' of the high frequency transformer of the intermediary stage such that a second terminal of a first power conversion switch S1 is connected to a first terminal of a second power conversion switch S2 and a first end A' of the primary winding, a first terminal of the first power conversion switch S1 is connected to a first terminal of a third power conversion switch S3, and a second terminal of the second power conversion switch S2 is connected to a second terminal of a fourth power conversion switch S4, and a second terminal of the third power conversion switch S3 is connected to a first terminal of the fourth power conversion switch S4 and a second end B' of the primary winding.

The power conversion switches S5-S8 of the second stage are two-quadrant switches. As used herein, the term "switch" refers to a switching device capable of connecting and disconnecting two electrical nodes realized, for example, using an Insulated-Gate Bipolar Transistor (IGBT), a Metal-Oxide-Semiconductor Field-Effect Transistor (MOSFET), thyristors, diodes, variable resistances or using any other devices of this class apparent to a person skilled in the art. The switch may also be a mechanical switch such as a contactor. Each of the four power conversion switches S5-S8 may be realized using a series or a parallel connection of one or more individual switches with help of a common gating logic pulse that would meet the voltage and current requirements of the bi-directional power converter.

According to one embodiment, the power conversion switches S5-S8 of the second stage are arranged across a secondary winding A-B of the high frequency transformer such that a second terminal of the first power conversion switch S5 is connected to a first terminal of the third power conversion switch S7 and to a first end A of the secondary winding, a first terminal of the first power conversion switch S5 is connected to a positive terminal of the first capacitor C1, a second terminal of the third power conversion switch S7 is connected to a second terminal of the fourth power conversion switch S8 and to a negative terminal of the second capacitor C2, wherein a negative terminal of the first capacitor C1 and a positive terminal of the second capacitor C2 are connected to one another and to a first terminal of the second power conversion switch S6, and the second terminal of the second power conversion switch S6 is connected to a first terminal of the fourth power conversion switch S8 and to a second end B of the secondary winding.

According to this embodiment, the second stage operates in one of a plurality of switching states at a given time instant. Advantageously, there are at least four switching states:
-- A first switching state SS1 wherein the first power conversion switch S5 and the second power conversion switch S6 are in an on state and the third power conversion switch S7 and the fourth power conversion switch S8 are in an off state, thereby causing the first capacitor C1 to charge and the second capacitor C2 to discharge;
-- A second switching state SS2 wherein the second power conversion switch S6 and the third power conversion switch S7 are in an on state and the first power conversion switch S5 and the fourth power conversion switch S8 are in an off state, thereby causing the first capacitor C1 to discharge and the second capacitor C2 to charge;
-- A third switching state SS3 wherein the third power conversion switch S7 and the fourth power conversion switch S8 are in an on state and the first power conversion switch S5 and the second power conversion switch S6 are in an off state, thereby causing the first capacitor C1 and the second capacitor C2 to discharge; and
-- A fourth switching state SS4 wherein the first power conversion switch S5 and the fourth power conversion switch S8 are in an on state and the second power conversion switch S6 and the third power conversion switch S7 are in an off state, thereby causing the first capacitor C1 and the second capacitor C2 to charge.

According to another embodiment, the power conversion switches S5-S8 of the second stage are arranged across a secondary winding A-B of the high frequency transformer such that a second terminal of the first power conversion switch S5 is connected to a first terminal of the third power conversion switch S7 and to a first end A of the secondary winding, a first terminal of the first power conversion switch S5 is connected to a first terminal of the second power conversion switch S6 and to a positive terminal of the second capacitor C2, a second terminal of the third power conversion switch S7 is connected to a negative terminal of the first capacitor C1, wherein a positive terminal of the first capacitor C1 and a negative terminal of the second capacitor C2 are connected to one another and to a second terminal of the fourth power conversion switch S8, and the second terminal of the second power conversion switch S6 is connected to a first terminal of the fourth power conversion switch S8 and to a second end B of the secondary winding.

According to this embodiment, the second stage operates in one of a plurality of switching states at a given time instant. Advantageously, there are at least four switching states:
-- A first switching state SS1 wherein the first power conversion switch S5 and the fourth power conversion switch S8 are in an on state and the second power conversion switch S6 and the third power conversion switch S7 are in an off state, thereby causing the first capacitor C1 to discharge and the second capacitor C2 to charge;
-- A second switching state SS2 wherein the third power conversion switch S7 and the fourth power conversion switch S8 are in an on state and the first power conversion switch S5 and the second power conversion switch S6 are in an off state, thereby causing the first capacitor C1 to charge and the second capacitor C2 to discharge;
-- A third switching state SS3 wherein the first power conversion switch S5 and the second power conversion switch S6 are in an on state and the third power conversion switch S7 and the fourth power conversion switch S8 are in an off state, thereby causing the first capacitor C1 and the second capacitor C2 to discharge; and
--A fourth switching state SS4 wherein the second power conversion switch S6 and the third power conversion switch S7 are in an on state and the first power conversion switch S5 and the fourth power conversion switch S8 are in an off state, thereby causing the first capacitor C1 and the second capacitor C2 to charge.

In the high voltage mode and in the low voltage mode of operation of the power conversion mode, the second stage assumes the first switching state SS1 corresponding to a positive voltage level of the high frequency AC voltage V2ac, the second switching state SS2 corresponding to a negative voltage level of the high frequency AC voltage V2ac, and the third switching state SS3 corresponding to a zero voltage level of the high frequency AC voltage V2ac.

Advantageously, in the low voltage mode, the second stage may also assume the fourth switching state SS4 corresponding to the positive voltage level of the high frequency AC voltage V2ac or the negative voltage level of the high frequency AC voltage V2ac based on a voltage appearing across one of the capacitors C1, C2.

For example, when the voltage across the first capacitor C1 is greater than zero the fourth switching state SS4 is selected for operation else the first switching state SS1 is selected for operation of the second stage corresponding to the positive voltage level of V2ac.

In another example, when the voltage across the first capacitor C1 is greater than zero the fourth switching state SS4 is selected for operation else the second switching state SS2 is selected for operation of the second stage corresponding to the negative voltage level of V2ac.

Advantageously, each of the power conversion switches S1-S10 of the first stage and the second stage, when in an off state, blocks a positive DC voltage applied across the first terminal and the second terminal of each of the power conversion switches S1-S10.

Advantageously, in the aforementioned power conversion mode of the bi-directional power converter, the second stage dynamically controls the DC voltage Vdc between V2 and 2V2, based on a voltage requirement of the EV that is based on a capacity of the vehicle battery. This dynamic variation in the DC voltage Vdc is achieved by selectively operating the power conversion switches S5-S8 of the second stage so as to achieve the switching states SS1-SS4 as described in the aforementioned paragraphs.

It would be understood to a person skilled in the art that multiple such bi-directional power converters may be connected together in parallel and employed as a multiphase converter with multiphase input and/or output connections. Moreover, each single phase converter can have multiple input connections connected together in parallel.

Also, disclosed herein is a control unit controlling the aforementioned bi-directional power converter and more specifically the isolated DC-DC converter of the bi-directional power converter.

The control unit may comprise controller(s) that selectively switch the power conversion switches S5-S8 of the second stage of the isolated DC-DC converter of the bi-directional power converter, between an on state and an off state to achieve the power conversion mode of operation or the power inversion mode of operation.

The control unit performs the aforementioned switching to achieve one of the plurality of switching states SS1-SS4 at a given time instant.

According to one aspect, the control unit performs this switching based on a voltage requirement of a battery of an electric vehicle when connected to a vehicle-side module connectable to the bi-directional power converter. The voltage requirement corresponds to the high voltage mode and the low voltage mode.

Advantageously, the control unit performs the selective switching of the power conversion switches S5-S8 of the second stage based on the construction of the second stage, that is, the connection topology between the power conversion switches S5-S8 with respect to one another and between the capacitors C1 and C2 and the power conversion switches S5-S8, as described in the two aspects in the aforementioned description of the bi-directional power converter.

According to another aspect, the controller(s) of the control unit selectively switch the power conversion switches S5-S8 of the second stage between an on state and an off state to achieve one of the plurality of switching states SS1-SS4 at a given time instant, such that the DC voltage Vdc available across the capacitors C1 and C2 of the second stage is converted into a high frequency AC voltage V2ac at the secondary winding of the intermediary stage of an isolated DC-DC converter of the bi-directional converter. The high frequency AC voltage V2ac is a multi-level AC voltage.

Thus, the control unit selectively triggers the power conversion switches S5-S8 for operating the bi-directional converter in a power conversion mode for converting the high frequency AC voltage V2ac into a DC voltage Vdc or a power inversion mode for converting the DC voltage Vdc into the high frequency AC voltage V2ac.

Also, disclosed herein is a charging device for transferring power between an electric vehicle (EV) and a power grid. The charging device comprises the aforementioned control unit, the aforementioned bi-directional power converter being controlled by the control unit, a grid-side module, and a vehicle-side module.

The grid-side module is capable of receiving, for example, in the power conversion mode of the bi-directional power converter, an AC voltage Vacgrid or a DC voltage Vdcgrid from the power grid, for example, an AC power grid or a DC power grid and/or an energy storage system, respectively. The grid-side module is also capable of delivering, for example, in the power inversion mode of the bi-directional power converter, the AC voltage Vacgrid or the DC voltage Vdcgrid to the power grid.

The vehicle-side module is capable of delivering a DC voltage Vdc to the EV connected to the charging device, for example, in the power conversion mode of the bi-directional power converter and receiving a DC voltage Vdc from the EV connected to the charging device, for example, in the power inversion mode of the bi-directional power converter.

The charging device disclosed herein, is advantageously a DC fast charger capable of charging a wide range of EVs including, for example, light motor vehicles such as cars and heavy duty EVs such as trucks, buses, etc.

Also, disclosed herein is a method for transferring power between an electric vehicle (EV) and a power grid using the aforementioned charging device. The method comprises detecting physical connection of the EV to the vehicle-side module of the charging device, and selectively operating the bi-directional power converter of the charging device in a power conversion mode or a power inversion mode.

The method further includes providing the DC voltage Vdc to the EV via the vehicle-side module of the charging device for charging the electric vehicle.

According to an embodiment, the method determines a DC voltage Vdc required for charging the EV, for example, based on a make and a type of the vehicle such as a heavy-duty truck or a light motor vehicle, etc.

According to an embodiment, the method receives an input from a user, operating the charging device, for selection of mode of operation, that is, power conversion mode or power inversion mode.

According to another embodiment, the method obtains, from the charging device, a preset mode of operation of the charging device selected by a user operating the charging device.

According to yet another embodiment, the method dynamically selects a mode of operation based on availability of voltage supply from power grid, for example, if the power grid is not supplying required AC or DC voltage then the method automatically switches into a power inversion mode feeding power into the grid and vice versa.

The method selectively operates the bi-directional power converter of the charging device in the power conversion mode to assume the high voltage mode or the low voltage mode by selectively switching the power conversion switches S5-S8 of the second stage between an on state and an off state to achieve one of the plurality of switching states SS1-SS4 at a given time instant. The method performs this selective switching based on the construction of the second stage, that is, the connection topology between the power conversion switches S5-S8 with respect to one another and between the capacitors C1 and C2 and the power conversion switches S5-S8, as described in the two aspects in the aforementioned description of the bi-directional power converter.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: illustrates a block diagram of a DC charger employed in charging of Electric Vehicles (EVs), according to state of the art;
- FIG 1B: illustrates an electrical circuit diagram of the power converter of the DC charger shown in FIG 1A, according to state of the art;
- FIG 2A: illustrates a block diagram of a charging device, according to an embodiment of the present disclosure;
- FIG 2B: illustrates a block diagram of a bi-directional power converter, according to an embodiment of the present disclosure;
- FIG 2C: illustrates an electrical circuit diagram of a first stage of the isolated DC-DC converter shown in FIG 2B, according to an embodiment of the present disclosure;
- FIG 2D: illustrates an electrical circuit diagram of an intermediary stage of the isolated DC-DC converter shown in FIG 2B, according to an embodiment of the present disclosure;
- FIGS 2E-2F: illustrate electrical circuit diagrams of a second stage of the isolated DC-DC converter shown in FIG 2B, according to various embodiments of the present disclosure;
- FIGS 3A-3D: illustrate current flows through the circuit diagram of the second stage shown in FIG 2E during various switching states of the bi-directional power converter shown in FIG 2B, according to an embodiment of the present disclosure;
- FIGS 4A-4C: illustrate current flows through the circuit diagram of the second stage shown in FIG 2E for generating an output DC voltage Vdc of 2V2, according to an embodiment of the present disclosure;
- FIGS 5A-5D: illustrate current flows through the circuit diagram of the second stage shown in FIG 2E for generating an output DC voltage Vdc of V2, according to an embodiment of the present disclosure;
- FIG 6: illustrates a process flow chart of a method for transferring power between an electric vehicle and a power grid using the bi-directional power converter shown in FIG 2B and the second stage shown in FIG 2E of the isolated DC-DC converter, according to an embodiment of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

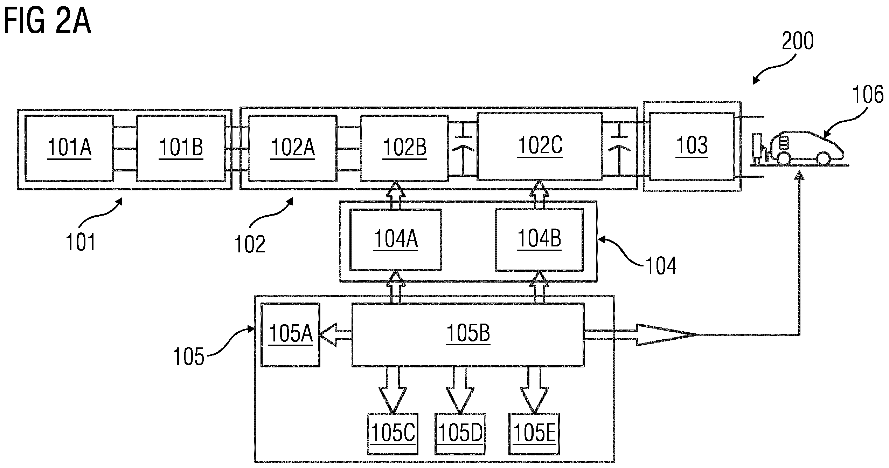

FIG 2A illustrates a block diagram of a charging device 200, according to an embodiment of the present disclosure. The charging device 200 includes a grid-side module 101, a bi-directional power converter 102, and a vehicle-side module 103 electrically coupled to one another as shown in FIG 2A. The grid-side module 101 has a 3-phase AC voltage supply denoted as Vacgrid represented by 101A coming from the three phase AC power grid 101A and a protection unit 101B electrically coupled to the 3-phase AC voltage supply/power grid 101A. The grid-side module 101 acts as an interface between the bi-directional power converter 102 and the power grid for receiving and delivering AC voltage Vacgrid from and to the power grid.

The bi-directional power converter 102 has an input filter 102A, a 3-phase AC to DC converter 102B such as a 3-phase pulse width modulation (PWM) converter and an isolated DC-DC converter 102C, electrically coupled with one another. The vehicle-side module 103 is a protection unit that is capable of receiving and delivering a DC voltage Vdc from and to an EV 106. The charging device 200 also includes a controller module 104, also referred to as a control module 104 or a control unit 104, having one or more controllers 104A, 104B. The controller module 104 is electrically coupled with the bi-directional power converter 102 for controlling the 3-phase pulse width modulation (PWM) converter 102B and the isolated DC-DC converter 102C.

The charging device 200 may also include a software module 105 having a user interface 105A such as a human machine interface (HMI) electrically coupled with a communication controller module 105B which in turn communicates with portable electronic devices 105C such as cell phones, a cloud communication network 105D and/or a smart power grid 105E. The communication controller module 105B also communicates with the EV 106.

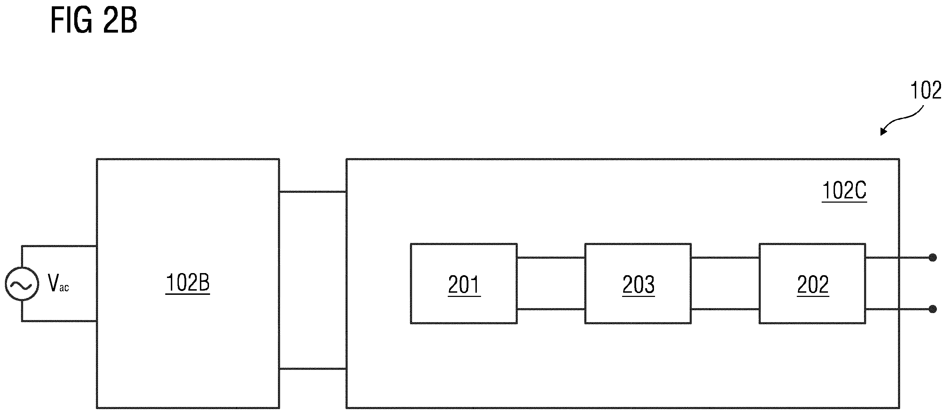

FIG 2B illustrates a block diagram of a bi-directional power converter 102, according to an embodiment of the present disclosure. The bi-directional power converter 102 receives a 3-phase AC input Vacgrid from the grid-side module 101 which is then provided to a 3-phase AC to DC converter 102B of the bi-directional power converter 102, that generates a DC voltage V1 which in turn is provided as an input to the isolated DC-DC conversion module 102C.

The isolated DC-DC converter 102C comprises a first stage 201 capable of converting the DC voltage V1 into a high frequency AC voltage V1ac of amplitude V1 and vice versa. The isolated DC-DC converter 102C comprises a second stage 202. The second stage 202 is capable of functioning in a power conversion mode converting a high frequency AC voltage V2ac of amplitude V2 into DC voltage Vdc of amplitude V2 or 2V2. These two stages 201 and 202 are coupled by an intermediary stage 203 providing high frequency isolation therebetween. The intermediary stage 203 includes a high frequency transformer connected between the first stage 201 and the second stage 202 having a turns ratio of V1 :V2.

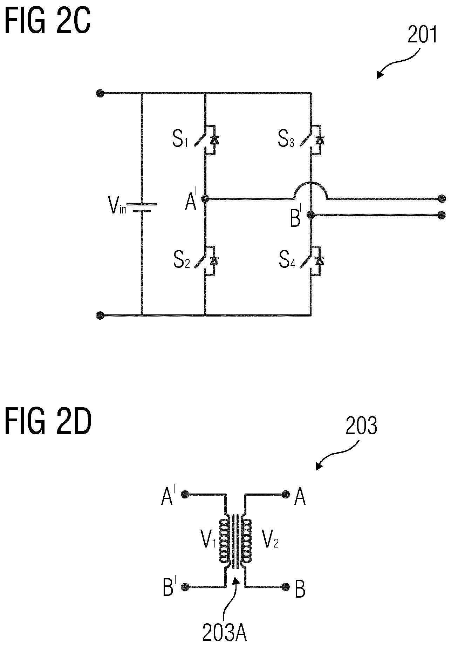

FIG 2C illustrates an electrical circuit diagram of a first stage 201 of the isolated DC-DC converter 102C shown in FIG 2B, according to an embodiment of the present disclosure. The first stage includes four power conversion switches S1-S4 electrically coupled to the intermediary stage 203 such that a second terminal of a first power conversion switch S1 is connected to a first terminal of a second power conversion switch S2 and a first end A' of a primary winding A'-B' of a high frequency transformer of the intermediary stage 203. A first terminal of the first power conversion switch S1 is connected to a first terminal of a third power conversion switch S3. A second terminal of the second power conversion switch S2 is connected to a second terminal of a fourth power conversion switch S4. A second terminal of the third power conversion switch S3 is connected to a first terminal of the fourth power conversion switch S4 and a second end B' of the primary winding A'-B'.

As shown in FIG 2C, each of the power conversion switches S1-S4 when in an off state, blocks a positive DC voltage applied across the first terminal and the second terminal of each of the power conversion switches S1-S4.

FIG 2D illustrates an electrical circuit diagram of an intermediary stage 203 of the isolated DC-DC converter 102C shown in FIG 2B, according to an embodiment of the present disclosure. The intermediary stage 203 includes a high frequency transformer 203A connected between the first stage 201 and the second stage 202. The high frequency transformer 203A has a primary winding A'-B' and a secondary winding A-B having a turns ratio of V1:V2 therebetween.

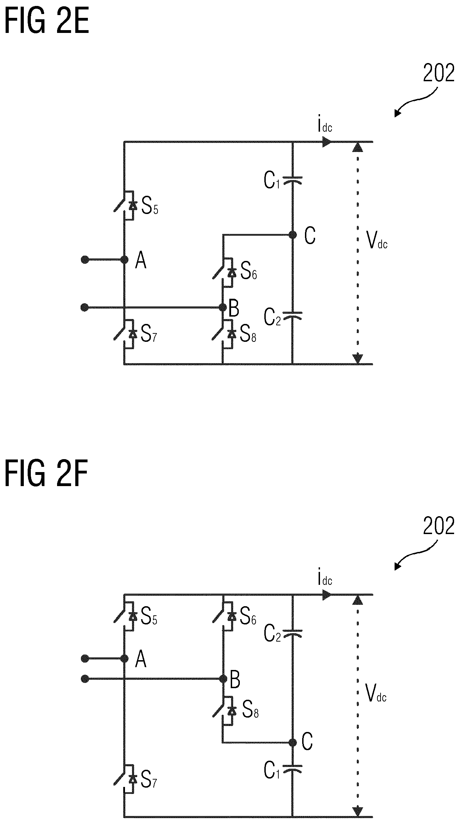

FIGS 2E-2F illustrate electrical circuit diagrams of a second stage 202 of the isolated DC-DC converter 102C shown in FIG 2B, according to various embodiments of the present disclosure. The second stage 202 includes four power conversion switches S5-S8 and the two or more capacitors C1, C2, arranged across a secondary winding A-B of the high frequency transformer 203A of the intermediary stage 203.

As shown in FIGS 2E and 2F, the second stage 202 comprises four power conversion switches S5-S8 and two or more capacitors C1, C2. The capacitors C1 and C2 have a common node C therebetween. Two of the power conversion switches S6 and S8 are series connected between the common node C and one of the DC poles of the second stage 202. The two power conversion switches S6 and S8 have a mid-point therebetween that is connected to one of the ends B of a secondary winding A-B of the high frequency transformer 203A.

According to an embodiment shown in FIG 2E, a second terminal of the first power conversion switch S5 is connected to a first terminal of the third power conversion switch S7 and to a first end A of the secondary winding A-B. A first terminal of the first power conversion switch S5 is connected to a positive terminal of the first capacitor C1. A second terminal of the third power conversion switch S7 is connected to a second terminal of the fourth power conversion switch S8 and to a negative terminal of the second capacitor C2 wherein a negative terminal of the first capacitor C1 and a positive terminal of the second capacitor C2 are connected to one another and to a first terminal of the second power conversion switch S6. The second terminal of the second power conversion switch S6 is connected to a first terminal of the fourth power conversion switch S8 and to a second end B of the secondary winding A-B.

According to an embodiment shown in FIG 2F, a second terminal of the first power conversion switch S5 is connected to a first terminal of the third power conversion switch S7 and to a first end A of the secondary winding A-B. A first terminal of the first power conversion switch S5 is connected to a first terminal of the second power conversion switch S6 and to a positive terminal of the second capacitor C2. A second terminal of the third power conversion switch S7 is connected to a negative terminal of the first capacitor C1 wherein a positive terminal of the first capacitor C1 and a negative terminal of the second capacitor C2 are connected to one another and to a second terminal of the fourth power conversion switch S8. The second terminal of the second power conversion switch S6 is connected to a first terminal of the fourth power conversion switch S8 and to a second end B of the secondary winding A-B.

A DC output voltage Vdc appears across the capacitors C1 and C2 corresponding to an AC voltage Vac2 appearing across the secondary winding A-B and vice versa based on whether the power converter 200 shown in FIG 2B is being operated in a power conversion mode or a power inversion mode.

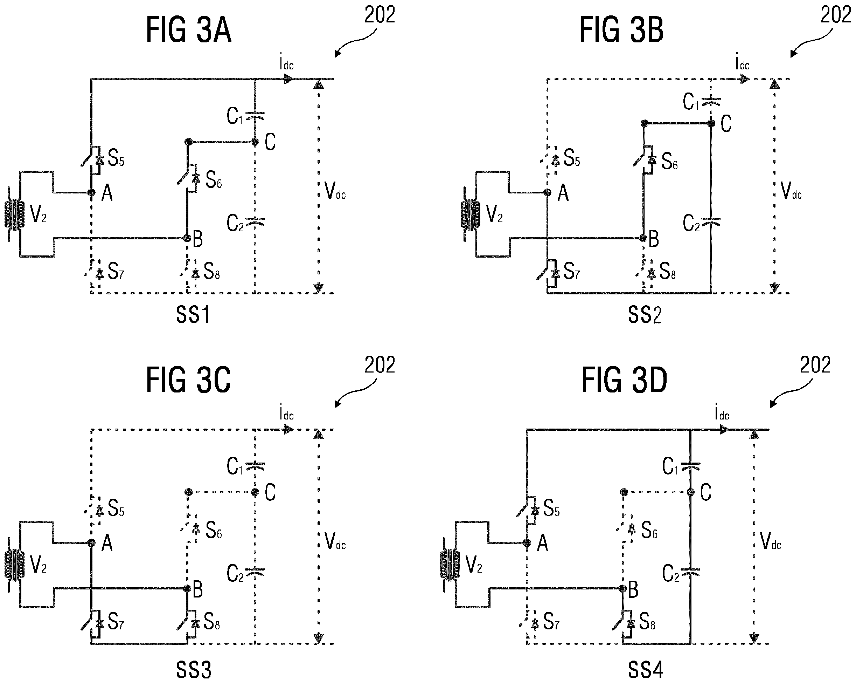

FIGS 3A-3D illustrate current flows through the circuit diagram of the second stage 202 shown in FIG 2E during various switching states SS1, SS2, SS3 and SS4 respectively of the bi-directional power converter 102 shown in FIG 2B, according to an embodiment of the present disclosure.

As shown in FIG 3A, during SS1, the switches S5 and S6 are in an on state, while S7 and S8 are in an off state and the high frequency AC voltage V2ac is at a positive voltage level.

As shown in FIG 3B, during SS2, the switches S6 and S7 are in an on state while S5 and S8 are in an off state and the high frequency AC voltage V2ac is at negative voltage level.

As shown in FIG 3C, during SS3, the switches S7 and S8 are in an on state while S5 and S6 are in an off state and the high frequency AC voltage V2ac is at zero-voltage level.

As shown in FIG 3D, during SS4, the switches S5 and S8 are in an on state while S7 and S6 are in an off state and the high frequency AC voltage V2ac is at positive voltage level.

The output of the converter Vdc is the sum of the voltages appearing across the capacitors C1 and C2. Both the capacitors C1 and C2 discharge into the battery of the electric vehicle EV 106. Therefore, to maintain the output voltage Vdc, these capacitors C1 and C2 are supplied with active power during one of the switching states SS1 through SS4. The charging and discharging of the capacitors C1 and C2, corresponds to the respective switching state SS1-SS4 applied as shown in Table-2, where 1 or 0 symbolizes switch turn on and switch turn off, respectively.

**Table-2**

| State | V2ac | S5 | S6 | S7 | S8 | C1 state | C2 state |
|---|---|---|---|---|---|---|---|
| SS1 | +V2 | 1 | 1 | 0 | 0 | charging | discharging |
| SS2 | -V2 | 0 | 1 | 1 | 0 | discharging | charging |
| SS3 | 0 | 0 | 0 | 1 | 1 | discharging | discharging |
| SS4 | +V2 | 1 | 0 | 0 | 1 | charging | charging |

A switching table for the bi-directional power converter 102 with the voltage selection switch S11 turned OFF is shown in Table 2 below where:

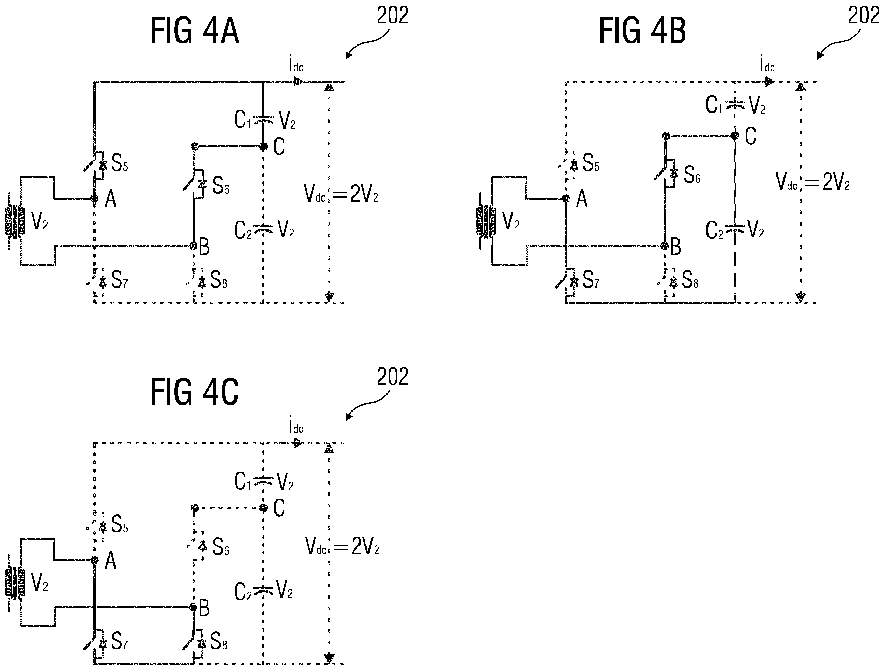

FIGS 4A-4C illustrate current flows through the circuit diagram of the second stage 202 shown in FIG 2E for generating an output DC voltage Vdc of 2V2, according to an embodiment of the present disclosure.

Thus, FIGS 4A-4C illustrate a high voltage mode wherein an output voltage Vdc = 2V2 is generated. For achieving this high voltage, the switching states SS1-SS4 are selected for operation of the bi-directional power converter 102 such that each of the capacitors C1 and C2 are charged to an equal voltage.

As shown in FIG 4A, at a positive level of the high frequency AC voltage V2ac, the switching state SS1 is selected. This charges the capacitor C1 to a voltage V2 while the capacitor C2 continues to discharge.

As shown in FIG 4B, at a negative level of the high frequency ac voltage V2ac, the switching state SS2 is selected. This charges the capacitor C2 to a voltage V2 while the capacitor C1 continues to discharge.

As shown in FIG 4C, at zero-level of the high frequency ac voltage V2ac, the switching state SS3 is selected. Herein, both the capacitors C1 and C2 continue to discharge.

As the positive level and negative level of the high frequency AC voltage V2ac appears for equal amount of time, both the capacitors C1, C2 are symmetrically charged and discharged for same duration. Thus, each of the output capacitors C1 and C2 are charged to voltage equal to twice the amplitude V2 of the high frequency input voltage V2ac. Hence, the output DC voltage Vdc is twice the amplitude V2 of high frequency input voltage V2ac, thus operating the bi-directional power converter 102 in a high voltage mode.

A switching table for the bi-directional power converter 102 in this high voltage mode of operation is shown in Table 3 below where:
The values 1 and 0 symbolize switch turn on and switch turn off respectively;
VAB is the voltage between nodes A and B representing the high frequency AC voltage V2ac; and
Vdc is the DC voltage generated by the bi-directional power converter 102.

**Table 3**

| V2ac | SS | S5 | S6 | S7 | S8 | Vdc |
|---|---|---|---|---|---|---|
| +V2 | SS1 | 1 | 1 | 0 | 0 | +2V2 |
| -V2 | SS2 | 0 | 1 | 1 | 0 | +2V2 |
| 0 | SS3 | 0 | 0 | 1 | 1 | +2V2 |

Similarly, the bi-directional power converter 102 shown in FIG 2B may be employed as a three-level inverter, when in a power inversion mode of operation, in which the DC voltage Vdc is converted into a 3-level AC voltage V2ac. The three voltage levels obtained corresponding to the DC voltage Vdc of 2V2 are +V2, 0, and -V2. Similarly, the three voltage levels obtained corresponding to the DC voltage Vdc of V2 are +0.5V2, 0, and - 0.5V2. This is achieved, for example, by operating the power conversion switches S5, S6, S7, and S8 as shown in FIG 2E in a switching pattern shown below in Table 4 where, 1 and 0 symbolize an On state and an Off state, respectively.

**Table 4**

| Vdc | S5 | S6 | S7 | S8 | Vac |
|---|---|---|---|---|---|
| +2V2 | 1 | 1 | 0 | 0 | +V2 |
| +2V2 | 0 | 0 | 1 | 1 | 0 |
| +2V2 | 0 | 1 | 1 | 0 | -V2 |

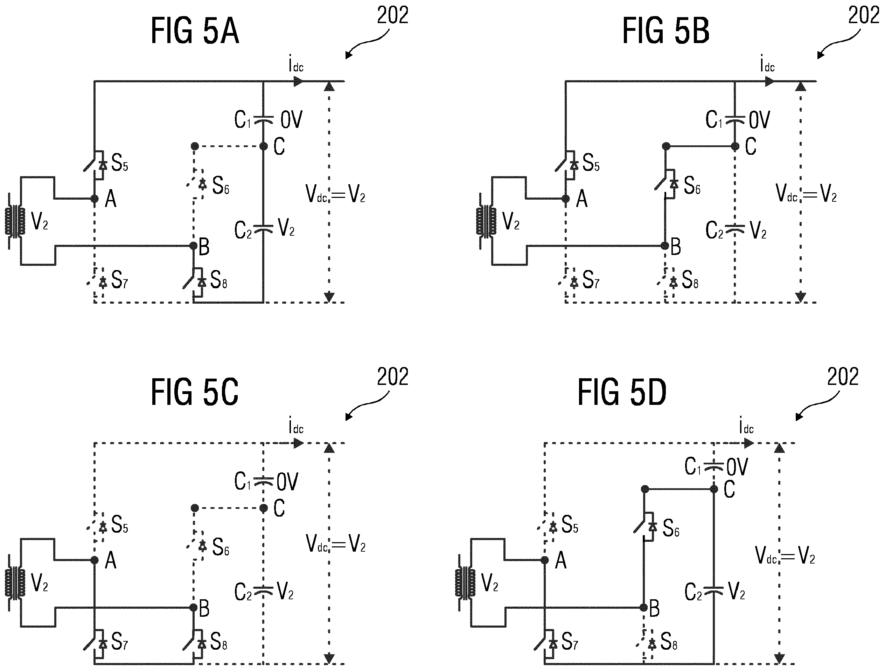

FIGS 5A-5D illustrate current flows through the circuit diagram of the second stage 202 shown in FIG 2E for generating an output DC voltage Vdc of V2, according to an embodiment of the present disclosure.

Thus, FIGS 5A-5D illustrate a low voltage mode of the bi-directional power converter 102 wherein an output voltage Vdc = V2 is generated. For achieving this low voltage, the switching states SS1-SS4 are selected for operation of the bi-directional power converter 102 such that one of the capacitors C1 and C2 is charged to a voltage equal to the amplitude V2 of the high frequency AC voltage V2ac while the other capacitor is maintained at a zero voltage.

As shown in FIGS 5A and 5B, at the positive level of the high frequency AC voltage V2ac, either the switching state SS1 or SS4 is selected. If SS4 is selected, as shown in FIG 5A, it results in charging of the both the capacitors C1 and C2. If SS1 is selected, as shown in FIG 5B, it results in charging the capacitor C1 while the capacitor C2 continues to discharge.

As shown in FIG 5C, at the zero level of the high frequency ac voltage V2ac, the switching state SS3 is selected. Herein, both the capacitors C1, C2 continues to discharge.

As shown in FIG 5D, at the negative level of the high frequency ac voltage V2ac, the switching state SS2 is selected. This charges the capacitor C2 while the capacitor C1 continues to discharge.

As the positive level and negative level appears for equal amount of time, the capacitor C2 is charged for a period higher than the capacitor C1 if the switching state SS4 is selected during the positive voltage level of the high frequency AC voltage V2ac. Consequently, the voltage across C1 continues to fall. In order to avoid negative voltage across the capacitor, the switching state SS1 is selected thereby charging C1 and maintaining its voltage to zero. This results in an asymmetrical charging of capacitors such that the capacitor C2 is charged to voltage equal to the amplitude high frequency ac voltage V2ac while the other capacitor C1 is maintained at zero voltage. Thus, output voltage is equal to the amplitude V2 of the high frequency ac voltage V2ac.

A switching table for the bi-directional power converter 102 in this low voltage mode of operation is shown in Table 5 below where:
The values 1 and 0 symbolize switch turn on and switch turn off respectively;
VAB is the voltage between nodes A and B representing the high frequency AC voltage V2ac; and
Vdc is the DC voltage generated by the bi-directional power converter 102.

**Table 5**

| V2ac | SS | S5 | S6 | S7 | S8 | Vdc |
|---|---|---|---|---|---|---|
| +V2 | SS4 | 1 | 0 | 0 | 1 | +V2 |
| +V2 | SS1 | 1 | 1 | 0 | 0 | +V2 |
| -V2 | SS2 | 0 | 1 | 1 | 0 | +V2 |
| 0 | SS3 | 0 | 0 | 1 | 1 | +V2 |

Similar to the FIGS 3A-3D, the switching states corresponding to the second stage 202 shown in FIG 2F are as shown in the Table 6 below, according to another embodiment of the present disclosure:

**Table 6**

| State | V2ac | S5 | S6 | S7 | S8 | C1 state | C2 state |
|---|---|---|---|---|---|---|---|
| SS1 | +V2 | 1 | 0 | 0 | 1 | discharging | charging |
| SS2 | -V2 | 0 | 0 | 1 | 1 | charging | discharging |
| SS3 | 0 | 1 | 1 | 0 | 0 | discharging | discharging |
| SS4 | -V2 | 0 | 1 | 1 | 0 | charging | charging |

Also, similar to the FIGS 4A-4C, the switching states corresponding to the second stage 202 shown in FIG 2F for generating an output DC voltage Vdc of 2V2, according to another embodiment of the present disclosure are as shown in the Table 7 below:

**Table 7**

| V2ac | SS | S5 | S6 | S7 | S8 | Vdc |
|---|---|---|---|---|---|---|
| +V2 | SS1 | 1 | 0 | 0 | 1 | +2V2 |
| -V2 | SS2 | 0 | 0 | 1 | 1 | +2V2 |
| 0 | SS3 | 1 | 1 | 0 | 0 | +2V2 |

Also, similar to FIGS 5A-5D, the switching states corresponding to the second stage 202 shown in FIG 2F for generating an output DC voltage Vdc of V2, according to another embodiment of the present disclosure are as shown in the Table 8 below:

**Table 8**

| V2ac | SS | S₅ | S₆ | S₇ | S₈ | V_{dc} |
|---|---|---|---|---|---|---|
| +V₂ | SS1 | 1 | 0 | 0 | 1 | +V₂ |
| -V₂ | SS2 | 0 | 0 | 1 | 1 | +V₂ |
| -V₂ | SS4 | 0 | 1 | 1 | 0 | +V₂ |
| 0 | SS3 | 1 | 1 | 0 | 0 | +V₂ |

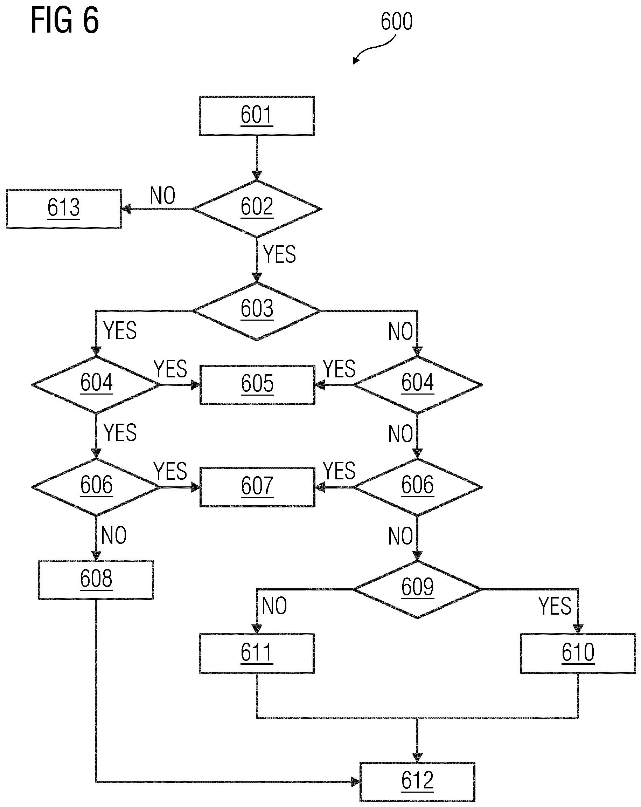

FIG 6 illustrates a process flow chart of a method 600 for transferring power between an electric vehicle (EV) 106 and a power grid 101A shown in FIG 2A, using the bi-directional power converter 102 shown in FIG 2B and the second stage 202 shown in FIG 2E of the isolated DC-DC converter 102C, according to an embodiment of the present disclosure. The method 600 disclosed herein employs the charging device 200 shown in FIG 2A.

At step 601, the method detects physical connection of the EV 106 to the vehicle-side module 103 of the charging device 200.

At step 602, the method determines whether a power conversion mode of operation of the bi-directional power converter 102 is selected by receiving a user input via a human machine interface of the charging device 200 regarding a mode of operation, that is, a power conversion mode or a power inversion mode in which the bi-directional power converter 102. The power conversion mode of the bi-directional power converter 102 comprises conversion of the AC voltage Vacgrid received from the power grid 101A into the DC voltage Vdc having amplitudes V2 or 2V2. The power inversion mode of the bi-directional power converter 102 comprises conversion of the DC voltage Vdc having amplitudes V2 or 2V2 into an AC voltage Vac which is fed back into the power grid 101A.

At step 603, when the power conversion mode is selected by the user, the method determines the voltage requirement of the EV 106 connected to the charging device 200.

If the voltage requirement is for a heavy-duty EV 106, that is, a high voltage requirement, then the method at step 604 determines if the amplitude V2 of the high frequency AC voltage is at a zero level. If yes, then method at step 605 selects the switching state SS3 for operating the second stage 202 of the isolated DC-DC power converter 102C of the bi-directional power converter 102. If not, then at step 606, the method determines the amplitude V2 is at a negative level. If yes, then the method at step 607 selects the switching state SS2 for operating the second stage 202. If not, then at step 608 the method selects the switching state SS1 for operating the second stage 202.

If the voltage requirement is not for a heavy-duty EV 106, that is, a low voltage requirement, then the method repeats the steps 604 to 607. However, if the amplitude V2 is neither at zero level nor at negative level, then at step 609, the method determines whether a voltage across one of the capacitors C1 or C2 is greater than 0. The method selects the capacitor C1 or C2 to measure voltage across based on the construction of the second stage 202. For example, if the second stage 202 is as shown in FIG 2E, then the method determines the voltage across the capacitor C1, Vc₁, else if the second stage 202 is as shown in FIG 2F, then the method determines the voltage across the capacitor C2, Vc₂. If the voltage Vc₁ or Vc₂ is greater than 0, then at step 610, the method selects the switching state SS4 for operating the second stage 202, else at step 611, the method selects the switching state SS1 for operating the second stage 202.

At step 612, the method applies the DC output voltage Vdc generated across the second stage 202 to the EV 106, via the vehicle side module 103 of the charging device 200.

At step 602, if a power inversion mode of operation is determined to be selected by the user, then at step 613,
the method operates the bi-directional power converter 102 in the power inversion mode wherein the DC voltage Vdc is received from the EV 106 and converted into the multi-level AC voltage V2ac having 3 levels, for example, -V2, 0, and +V2 corresponding to a DC voltage Vdc of 2V2 and -0.5V2, 0, and +0.5V2 corresponding to a DC voltage Vdc of V2. The method further provides this multi-level AC voltage V2ac to the intermediary stage 203 of the bi-directional power converter 102 which is further converted into a high frequency AC voltage V1ac by the high frequency transformer 203A of the intermediary stage 203 which in turn is converted into a DC voltage V1 by the first stage 201 of the bi-directional power converter 102 which can either be directly fed to a DC power grid or an energy storage system or converted into an AC voltage Vac and fed back to the AC power grid 101A.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### List of reference numerals:

- 100: DC charger according to state of the art
- 101: input module
- 101A: power grid
- 101B: input side protection unit
- 102: power converter according to state of the art
- 102A: input filter
- 102B: 3-phase AC-DC converter
- 102C: isolated DC-DC converter
- 103: output module
- 104: controller module/control unit
- 104A,: 104B controllers
- 105: software module
- 105A: user interface
- 105B: communication controller module
- 105C: portable electronic devices
- 105D: communication network
- 105E: power grid/smart grid
- 106: electric vehicle (EV)
- 201: first stage of the isolated DC-DC converter
- 202: second stage of the isolated DC-DC converter according to state of the art
- 203: intermediary stage of the isolated DC-DC converter
- 200: charging device
- 102: bi-directional power converter according to the present disclosure
- 202: second stage of the bi-directional power converter
- S1-S8: power conversion switches
- C1, C2 -: capacitors
- SS1 -: first switching state of the second stage
- SS2 -: second switching state of the second stage
- SS3 -: third switching state of the second stage
- SS4 -: fourth switching state of the second stage

## Claims

1. A bi-directional power converter (102), comprising:
∘ an isolated DC-DC converter (102C) comprising:
▪ a first stage (201) capable of converting a DC voltage (V1) into a high frequency AC voltage (V1ac) having an amplitude V1 and vice versa;
▪ a second stage (202) configured to operate in one of:
• a power conversion mode of operation, wherein the second stage (202) selectively converts a high frequency AC voltage (V2ac) having an amplitude V2 into a DC voltage (Vdc), and wherein an amplitude of the DC voltage (Vdc) is one of:
∘ V2 in a low voltage mode of operation of the second stage (202); and
∘ 2V2 in a high voltage mode of operation of the second stage (202); and
• a power inversion mode of operation, wherein the second stage (202) converts the DC voltage (Vdc) into the high frequency AC voltage (V2ac); and
▪ an intermediary stage (203) electrically coupled to the first stage (201) and the second stage (202) and comprising a high frequency transformer (203A), wherein a turns ratio of the high frequency transformer (203A) equals a ratio of the high frequency AC voltage (V1 ac) and the high frequency AC voltage (V2ac);
- **characterized in that**:
▪ the second stage (202) comprises four power conversion switches (S5-S8) and two or more capacitors (C1, C2), said capacitors (C1, C2) having a common node (C) therebetween, and wherein:
• two of the power conversion switches (S6, S8) are series connected between the common node (C) and one of the DC poles of the second stage (202); and
• the two power conversion switches (S6, S8) having a mid-point therebetween that is connected to one of the ends (B) of a secondary winding (A-B) of the high frequency transformer (203A).

2. The power converter (102) according to claim 1, wherein in the second stage (202), the power conversion switches (S5-S8) are arranged across the secondary winding (A-B) of the high frequency transformer (203A) such that:
- a second terminal of the first power conversion switch (S5) is connected to a first terminal of the third power conversion switch (S7) and to a first end A of the secondary winding;
- a first terminal of the first power conversion switch (S5) is connected to a positive terminal of the first capacitor (C1);
- a second terminal of the third power conversion switch (S7) is connected to a second terminal of the fourth power conversion switch (S8) and to a negative terminal of the second capacitor (C2), wherein a negative terminal of the first capacitor (C1) and a positive terminal of the second capacitor (C2) are connected to one another and to a first terminal of the second power conversion switch (S6); and
- the second terminal of the second power conversion switch (S6) is connected to a first terminal of the fourth power conversion switch (S8) and to a second end B of the secondary winding.

3. The power converter (102) according to claim 2, wherein the second stage (202), during the power conversion mode of operation, is configured to operate in one of a plurality of switching states at a given time instant, and wherein the switching states comprise:
- a first switching state (SS1) wherein the first power conversion switch (S5) and the second power conversion switch (S6) are in an on state and the third power conversion switch (S7) and the fourth power conversion switch (S8) are in an off state, thereby causing the first capacitor (C1) to charge and the second capacitor (C2) to discharge;
- a second switching state (SS2) wherein the second power conversion switch (S6) and the third power conversion switch (S7) are in an on state and the first power conversion switch (S5) and the fourth power conversion switch (S8) are in an off state, thereby causing the first capacitor (C1) to discharge and the second capacitor (C2) to charge;
- a third switching state (SS3) wherein the third power conversion switch (S7) and the fourth power conversion switch (S8) are in an on state and the first power conversion switch (S5) and the second power conversion switch (S6) are in an off state, thereby causing the first capacitor (C1) and the second capacitor (C2) to discharge; and
- a fourth switching state (SS4) wherein the first power conversion switch (S5) and the fourth power conversion switch (S8) are in an on state and the second power conversion switch (S6) and the third power conversion switch (S7) are in an off state, thereby causing the first capacitor (C1) and the second capacitor (C2) to charge.

4. The power converter (102) according to claim 1, wherein in the second stage (202), the power conversion switches (S5-S8) are arranged across the secondary winding (A-B) of the high frequency transformer (203A) such that:
- a second terminal of the first power conversion switch (S5) is connected to a first terminal of the third power conversion switch (S7) and to a first end (A) of the secondary winding;
- a first terminal of the first power conversion switch (S5) is connected to a first terminal of the second power conversion switch (S6) and to a positive terminal of the second capacitor (C2);
- a second terminal of the third power conversion switch (S7) is connected to a negative terminal of the first capacitor (C1), wherein a positive terminal of the first capacitor (C1) and a negative terminal of the second capacitor (C2) are connected to one another and to a second terminal of the fourth power conversion switch (S8); and
- the second terminal of the second power conversion switch (S6) is connected to a first terminal of the fourth power conversion switch (S8) and to a second end B of the secondary winding.

5. The power converter (102) according to claim 4, wherein the second stage (202), during the power conversion mode of operation, is configured to operate in one of a plurality of switching states at a given time instant, and wherein the switching states comprise:
- a first switching state (SS1) wherein the first power conversion switch (S5) and the fourth power conversion switch (S8) are in an on state and the second power conversion switch (S6) and the third power conversion switch (S7) are in an off state, thereby causing the first capacitor (C1) to discharge and the second capacitor (C2) to charge;
- a second switching state (SS2) wherein the third power conversion switch (S7) and the fourth power conversion switch (S8) are in an on state and the first power conversion switch (S5) and the second power conversion switch (S6) are in an off state, thereby causing the first capacitor (C1) to charge and the second capacitor (C2) to discharge;
- a third switching state (SS3) wherein the first power conversion switch (S5) and the second power conversion switch (S6) are in an on state and the third power conversion switch (S7) and the fourth power conversion switch (S8) are in an off state, thereby causing the first capacitor (C1) and the second capacitor (C2) to discharge; and
- a fourth switching state (SS4) wherein the second power conversion switch (S6) and the third power conversion switch (S7) are in an on state and the first power conversion switch (S5) and the fourth power conversion switch (S8) are in an off state, thereby causing the first capacitor (C1) and the second capacitor (C2) to charge.

6. The power converter (102) according to any one of the previous claims, wherein the second stage (202), in the high voltage mode and in the low voltage mode of the power conversion mode of operation, is configured to assume:
∘ the first switching state (SS1) corresponding to a positive voltage level of the high frequency AC voltage (V2ac);
∘ the second switching state (SS2) corresponding to a negative voltage level of the high frequency AC voltage (V2ac); and
∘ the third switching state (SS3) corresponding to a zero voltage level of the high frequency AC voltage (V2ac).

7. The power converter (102) according to claim 6, wherein the second stage (202) in the low voltage mode of the power conversion mode of operation, is configured to assume the fourth switching state (SS4) corresponding to one of the positive voltage level of the high frequency AC voltage (V2ac) and the negative voltage level of the high frequency AC voltage (V2ac) based on a voltage appearing across one of the capacitors (C1, C2).

8. A control unit (104) controlling the bi-directional power converter (102) according to claims 1-6, wherein the control unit (104) comprises one or more controllers (104A-104B) configured to selectively switch the power conversion switches (S5-S8) of the second stage (202) of the isolated DC-DC converter (102C) of the bi-directional power converter (102), between an on state and an off state at a given time instant to achieve one of the power conversion mode of operation and the power inversion mode of operation.

9. A charging device (200) for transferring power between an electric vehicle (106) and a power grid (101A), wherein the charging device (200) comprises:
- the control unit (104) according to claim 7;
- the bi-directional power converter (102) according to claims 1-6, being controlled by the control unit (104);
- a grid-side module (101) capable of:
∘ receiving one of an AC voltage (Vacgrid) and a DC voltage (Vdcgrid) from the power grid (101A); and
∘ delivering one of the AC voltage (Vacgrid) and the DC voltage (Vdcgrid) to the power grid (101A); and
- a vehicle-side module (103) capable of:
∘ receiving the DC voltage (Vdc) from the electric vehicle (106); and
∘ delivering the DC voltage (Vdc) to the electric vehicle (106),
- and wherein the vehicle-side module (103) is electrically coupled to the grid-side module (101) via the bi-directional power converter (102).

10. A method (600) for transferring power between an electric vehicle (106) and a power grid (101A) using the charging device (200) according to claim 9, comprising:
- detecting (601) physical connection of the electric vehicle (106) to the vehicle-side module (103) of the charging device (200); and
- selectively operating (602) the bi-directional power converter (102) of the charging device (200) in one of the power conversion mode of operation and the power inversion mode of operation.
